# EUROPEAN PATENT APPLICATION

(11) **EP 1 416 716 A1**
(43) Date of publication of application: **06.05.2004**
(21) Application number: 03078300.5
(22) Date of filing: 20.10.2003
(51) Int. Cl.: H04N 1/40

(54) **Multitoning a digital image having at least one group of similar color channels**

(30) Priority: 30.10.2002 US 283768
(71) Applicant: EASTMAN KODAK COMPANY (a New Jersey corporation), Rochester, New York 14650 (US)
(72) Inventor: Couwenhoven, Douglas W. Eastman Kodak Company, Rochester New York 14650-2201 (US); Spaulding, Kevin E. Eastman Kodak Company, Rochester New York (US)
(74) Representative: Weber, Etienne Nicolas

(57) **Abstract**

A method for processing an input digital image having an x,y array of input pixels having associated input pixel values, to produce a multichannel multitoned output image having two or more colorant channels, wherein at least two of the colorant channels are similar, having substantially the same color but different densities, including determining continuous-tone pixel values for each colorant channel of the input digital image in response to the input pixel values using an ink manifold processor; for each colorant channel, selecting a multitone process from a plurality of multitone processes in response to an input pixel value using a multitone process controller; for each colorant channel, applying the selected multitone process to the continuous-tone pixel value to produce a multitoned output pixel value; and repeating steps a)-c) for each input pixel in the input digital image to produce the multichannel multitoned output image.

## Description

This invention relates generally to the field of digital image processing, and more particularly to multitoning digital color images for a color output device having at least one group of similar color channels with substantially the same color but with different densities.

Halftoning is a technique that is commonly used in digital imaging to create the appearance of intermediate tones when only two colorant levels (that is, ink or no ink) are available. Halftoning methods rely on the fact that an observer's eye will spatially average over some local area of the image so that intermediate tone levels can be created by turning some of the pixels "on" and some of the pixels "off" in some small region. The fraction of the pixels, which are turned on, will determine the apparent gray level. Examples of common halftoning techniques include ordered dither and error diffusion. Multitoning is a simple extension of halftoning for systems that can print more than two colorant levels. For example, consider an inkjet printer that may print no dot, a small dot, or a large dot at each pixel, resulting in three density levels.

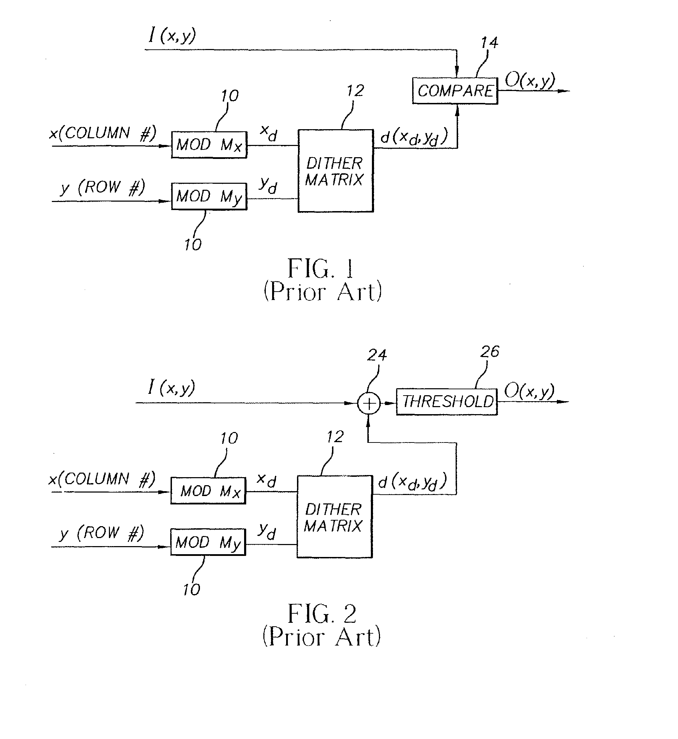

The ordered dither technique is typically implemented by forming a dither matrix having MₓxM_{y} elements that is tiled across the image. The elements of the dither matrix are distributed across the range of expected input tone values so that the full range of tones can be reproduced. A basic flow chart for this approach is shown in FIG. 1. A given pixel in the image has column and row addresses x and y, respectively, and an input pixel value I(x,y). Modulo operators 10 are used to determine indices x_{d} and y_{d} that are used to address the dither matrix 12. The threshold value d(x_{d},y_{d}) stored in the dither matrix at this address is then compared to the input pixel value I(x,y) using a comparator 14. If the input pixel value is equal to or below the threshold value, the output pixel value O(x,y) is set to "off"; if the value is above the threshold, the output pixel value O(x,y) is set to "on".

A second implementation of this basic technique is shown in FIG. 2. In this case the threshold value d(x_{d},y_{d}) is combined with the input pixel value I(x,y) using an adder 24. A threshold operator 26 is then used to threshold the combined value to determine the output pixel value O(x,y).

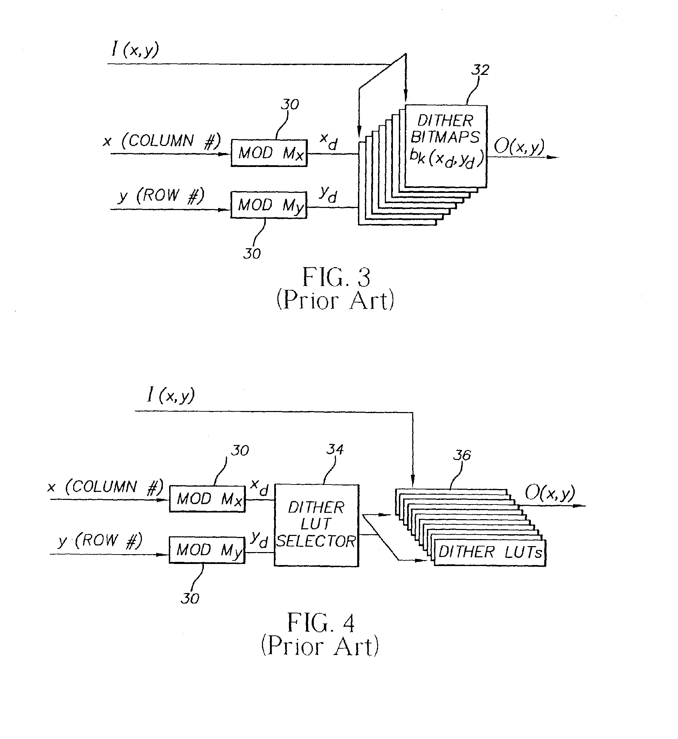

Another implementation of this basic technique is shown in FIG. 3. In this case a set of k dither bitmaps 32 are formed corresponding to the halftone patterns formed when the dither matrix is thresholded at each input level k. The input pixel value I(x,y) is then used to select which of the dither bitmaps should be used for each pixel. Modulo operators 30 are used to determine indices x_{d} and y_{d} that are used to address the selected dither bitmap to determine the output pixel value O(x,y). This implementation has the advantage that fewer computations are necessary to process each pixel. It should be noted that any dither pattern that can be implemented using the methods of FIG. 1 and FIG. 2 can also be implemented using the method of FIG. 3. However, it is possible to define a set of dither bitmaps for the method of FIG. 3 that could not be implemented using the other methods. This is because in the dither matrix implementations once a certain pixel is turned on at the input value corresponding to the threshold, it will stay on for all higher input values. With the dither bitmaps approach this constraint is not present. For example, a certain pixel could be "off'' for an input value of 150, "on" for an input value of 151, and "off'' again for an input value of 152.

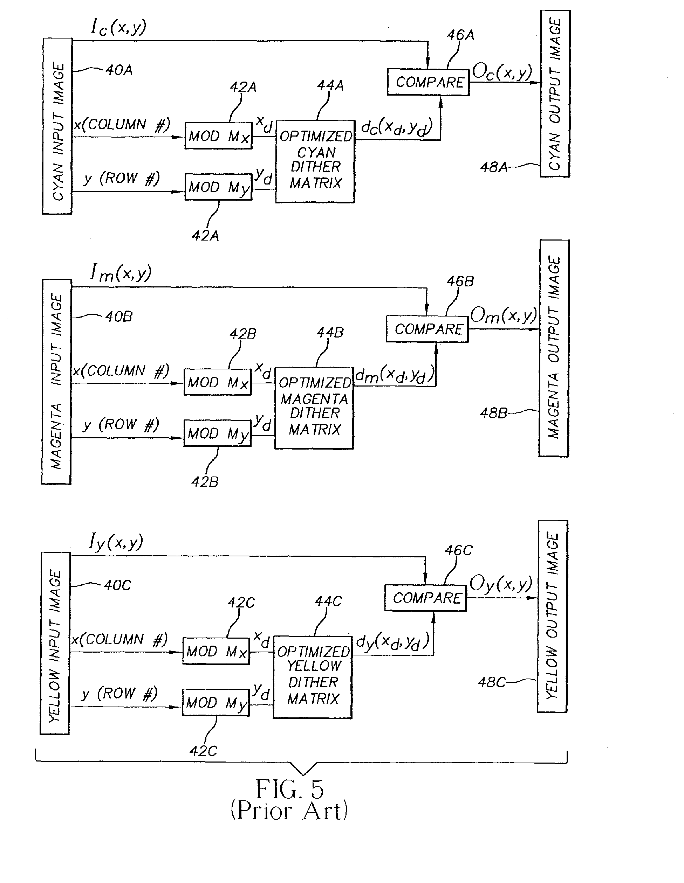

Yet another implementation of this basic technique is shown in FIG. 4. In this case a set of dither look-up tables (LUTs) 36 are used. The dither LUTs 36 are addressed by the input pixel value I(x,y) and store the corresponding output pixel value to be produced at some pixel location. Modulo operators 30 are used to determine indices x_{d} and y_{d} that are used to address a dither LUT selector 34 which selects one of the dither LUTs 36. The output pixel value O(x,y) is determined by addressing the selected dither LUT with the input pixel value I(x,y). This implementation also has the advantage that fewer computations are necessary to process each pixel. It should be noted that any dither pattern that can be implemented using the methods of FIG. 1, and FIG. 2 can also be implemented using the method of FIG. 4. However, as with the method shown in FIG. 3, it is also possible to define a set of dither LUTs 36 that could not be implemented using the other methods.

A variety of different dither matrices have been used in the past which create resulting images with different visual characteristics. Common types include random dither matrices, clustered-dot dither matrices, and Bayer (dispersed dot) dither matrices. Sullivan and Miller (US-A-4,920,501) have introduced a technique to design dither bitmaps, which have minimum visual modulation. These patterns are sometimes called "blue noise" patterns. They are attractive in that the patterns that are produced have minimum visibility to human observers, and as a result the images produced are visually pleasing relative to images produced using other patterns. The basic procedure involved in the creation of these patterns is to use an optimization technique, such as stochastic annealing, to determine the arrangement of the matrix elements which minimizes some cost function based upon weighting the frequency components of the halftone patterns with a human visual sensitivity function. Sullivan and Ray have also disclosed an enhancement to this method, which insures that the bitmaps for each of the gray levels are correlated in such a way that they can be implemented using a dither matrix (US-A-5,214,517). Other extensions to this basic approach include a method for simultaneously optimizing all of the gray levels (US-A-5,754,311), a method for designing blue noise dither matrices for use with multilevel output devices (US-A-5,586,203), and a method for creating partially correlated dither matrices (US-A-5,946,452).

Parker and Mitsa (US-A-5,111,310) and Lin (US-A-5,317,418 and US-A-5,469,515) have also introduced techniques for the design of dither patterns. Although the actual optimization methods that they have used are somewhat different, the resulting patterns are quite similar to those created using the methods described in the Sullivan and others patents.

When producing color images on binary output devices, it is necessary to halftone each of the color channels. Typically the color planes are cyan, magenta and yellow (CMY), or cyan, magenta, yellow and black (CMYK). If the same halftoning pattern is used for each of the color channels, this is known as "dot-on-dot" printing. This approach is rarely used in practice because it results in a higher level of luminance modulation, and additionally the color reproduction characteristics will be more sensitive to registration errors. The higher level of luminance modulation will cause the halftone patterns to be more visible than one of the color channels printed alone. The increased sensitivity to registration errors may cause the reproduced color to drift page to page, or even within a page, as the registration characteristics of printing apparatus change. In the graphic arts field the preferred solution has typically been to decorrelate the halftone patterns by rotating the halftone patterns to different "screen angles." For conventional graphic arts halftone methods, this rotation can either be accomplished optically or digitally.

A number of techniques have been suggested for decorrelating the halftone patterns used for ordered dither (for example, see US-A-5,341,228). These include using independently derived dither matrices for each color channel, spatially shifting the dither matrix patterns for each color plane relative to a reference dither matrix, and using an inverse dither matrix for one or more of the color channels. Each of these techniques has advantage that the halftone patterns for the different color channels will be decorrelated, and therefore the resulting halftone image should produce lower amounts of luminance modulation and sensitivity to registration errors relative to the nominal dot-on-dot printing case. However, none of these techniques will produce images that exhibit optimal appearance, particularly with respect to the visibility of the halftone patterns.

In US-A-5,822,451, Spaulding and others have disclosed a method for halftoning a multichannel digital color image wherein dither matrices for the different color channels of the color image are designed jointly to minimize a visual cost function. One embodiment of this method is shown in FIG. 5. It can be seen that a conventional dither halftoning method like that shown in FIG. 1 is applied to each channel of a multichannel color image, wherein the dither matrices used for each color channel are jointly optimized. In particular, a multichannel input color image having a cyan input image 40A, a magenta input image 40B, and a yellow input image 40C is processed to form a multichannel output color image having a corresponding cyan output image 48A, magenta output image 48B, and yellow output image 48C. Modulo operators 42A, 42B, and 42C are used to determine the dither matrix column and row addresses x_{d} and y_{d}, respectively, for an input pixel having image column and row addresses x and y, respectively. The dither matrix column and row addresses are used to address jointly optimized dither matrices 44A, 44B, and 44C which are jointly optimized for the cyan, magenta, and yellow color channels to determine cyan, magenta, and yellow dither values d_{c}(x_{d},y_{d}), dₘ(x_{d},y_{d}), and d_{y}(x_{d},y_{d}), respectively. The addressed dither values are then compared to the input pixel values, I_{c}(x,y), Iₘ(x,y), and I_{y}(x,y) for the corresponding color channels using comparators 46A, 46B, and 46C to determine the output pixel values O_{c}(x,y), Oₘ(x,y), and O_{y}(x,y). If the input pixel value is larger than the addressed dither value, the comparator will turn the output pixel value to "on." Conversely, if the input pixel value is equal to or smaller than the addressed dither value, the comparator will turn the output pixel value to "off." Any other variety of dither algorithms could also be used, such as the methods shown in FIG. 2, FIG. 3 or FIG. 4.

When multiple inks are used for a particular printer color channel, there are many ways to determine the color values for each of the individual colorants. For example, the color values for the individual colorants may be determined by splitting a corresponding input color channel (for example, a cyan input color channel can be split into a light cyan color channel and a dark cyan color channel by using the cyan color value to address a look-up table for the light cyan color channel, and a second look-up table for the dark cyan color channel as taught by Couwenhoven and others in US-A-6,312,101.) Alternatively, the color values for the individual colorants can be determined using more complicated color modeling techniques. In that case, a multi-dimensional look-up table, or some other complex function may be necessary to compute the color values.

While the halftoning method of Spaulding and others taught in US-A-5,822,451 can, in general, be applied to determine dither matrices for a set of color channels, including each of the similar colorant color channels, there are several limitations to this approach. First of all, the computational complexity of the optimization process increases substantially with every additional color channel, which can make determination of the dither matrices impractical in some cases. Secondly, the definition of the visual cost function values can become quite ambiguous due to the complex relationship that may exist between the amounts of the individual colorants that are used in different parts of color space. Additionally, it is desirable, in many cases, to minimize the overlap of the different density colorants in the color channels that have multiple colorants, in order to minimize the amount of white paper that results when there is partial coverage. The prior art makes no provision for meeting this criterion while maintaining the desirable characteristics of the jointly optimized dither patterns. For example, if a given color calls for 50% coverage of light cyan ink and 50% coverage of dark cyan ink, the method of Spaulding and others may produce dither patterns where some pixels have neither light ink or dark ink, and other pixels have both light ink and dark ink. Similarly, US-A-4,635,078 and US-A-5,729,259 describe printer systems with light and dark inks, but do not provide for jointly optimized dither patterns.

The aforementioned problems will become more severe in printers that have more than two similar colorants in one or more of the color channels. For example, a printer that uses three different densities of black ink will exhibit undesirable artifacts if the prior art halftoning methods are used. US-A-5,142,374 discloses a method of printing an image using three black colorants of different densities, but neglects the tone levels where two or more of the colorants are mixed in various percentages, resulting in undesirable grainy artifacts at these tone levels.

US-A-6,164,747 discloses a method of printing an image using three (or more) black colorants wherein an input digital image is multitoned before the image is split into separate ink channels. This architecture does not provide for full control over the halftone patterns for each ink that are result near the tone levels where transitions between the different density inks occur, resulting in grainy artifacts at those tone levels.

It is an object of the present invention to provide an improved way for processing a digital image so that the processed digital image can be applied to a multichannel multicolorant printer wherein optimal image quality is maintained throughout the tonescale.

It is an object of the present invention to produce a multichannel multitone output image from an input digital image which has at least two color channels having substantially the same color but different densities.

These objects are achieved by a method for processing an input digital image having an x,y array of input pixels having associated input pixel values, to produce a multichannel multitoned output image having two or more colorant channels, wherein at least two of the colorant channels are similar, having substantially the same color but different densities, comprising the steps of:
a) determining continuous-tone pixel values for each colorant channel of the input digital image in response to the input pixel values using an ink manifold processor;
b) for each colorant channel, selecting a multitone process from a plurality of multitone processes in response to an input pixel value using a multitone process controller;
c) for each colorant channel, applying the selected multitone process to the continuous-tone pixel value to produce a multitoned output pixel value; and
d) repeating steps a)-c) for each input pixel in the input digital image to produce the multichannel multitoned output image.

The present invention provides a way to process an input digital image to produce a multichannel multitoned output image that can be applied to a digital printer to produce high quality prints when the input digital image has at least two colorant channels having substantially the same color but different densities.

The present invention has the further advantage that a set of dither matrices that have been optimized for use with a conventional color printer can be simply modified for use in a printer where one or more of the color channels is printed using multiple colorants of similar color but different densities.

The present invention has the additional advantage that it provides a computationally efficient means for producing optimized dither matrices for color printers where one or more of the color channels is printed using multiple similar colorants having substantially the same color but different densities.

The present invention has the further advantage of minimizing the amount of dot overlap for the different density colorants, thereby minimizing the amount of white dots in areas where only one ink color (for example, black) is printed. This results in reducing the visibility of the halftone patterns for these image regions.

The present invention has the further advantage of minimizing the visibility of the halftone patterns generated by mixing of the similar colorants within a color channel over the entire tonescale, even when more than two similar colorants are used for a given color channel.

FIGS. 1-4 are schematic block diagrams showing prior art ordered dither techniques for halftoning;
FIG. 5 is a schematic block diagram showing a prior art ordered dither technique including jointly optimized dither matrices;
FIG. 6 is a schematic block diagram showing a method for halftoning an image in accordance with the present invention;
FIG. 7 is a schematic block diagram showing an alternative method for halftoning an image in accordance with the present invention;
FIG. 8 is a schematic block diagram illustrating a multilevel halftoning method in accordance with the present invention;
FIG. 9 is a schematic block diagram illustrating a multilevel halftoning method in accordance with the present invention;
FIG. 10 is a graph of an ink manifold function for a printer that uses three different density black colorants;
FIG. 11 is a table of dither matrix values;
FIG. 12 is a table of inverted dither matrix values;
FIG. 13 is a graph showing dot patterns formed by mixing a light and medium density black ink using prior art methods;
FIG. 14 is a graph showing dot patterns formed by mixing a light and medium density black ink in accordance with the present invention;
FIG. 15 is a graph showing dot patterns formed by mixing a light, medium, and dark density black ink;
FIG. 16 is a graph showing dot patterns formed by mixing a light, medium, and dark density black ink according to the present invention; and
FIG. 17 is a graph showing the output of the multitone process controller of FIG. 9 in accordance with the present invention.

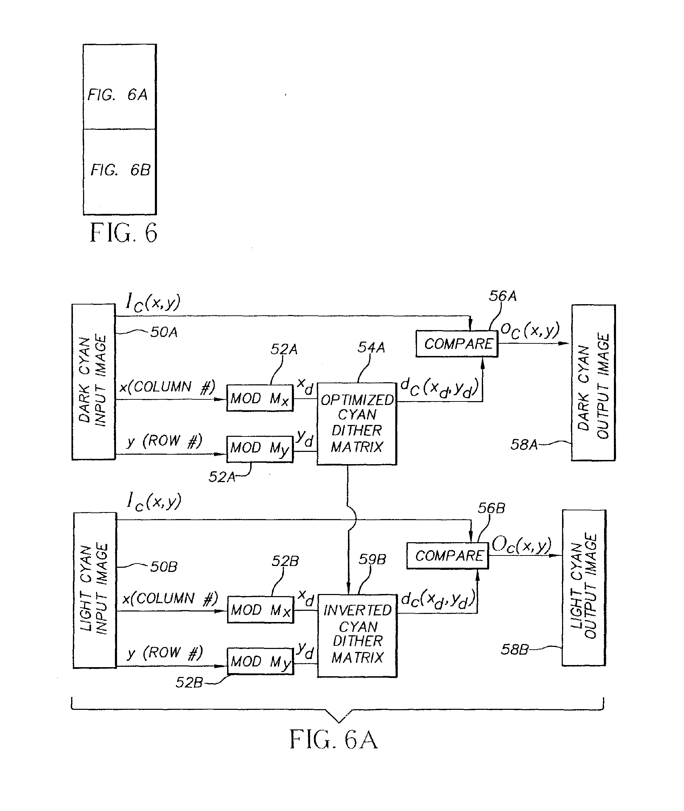

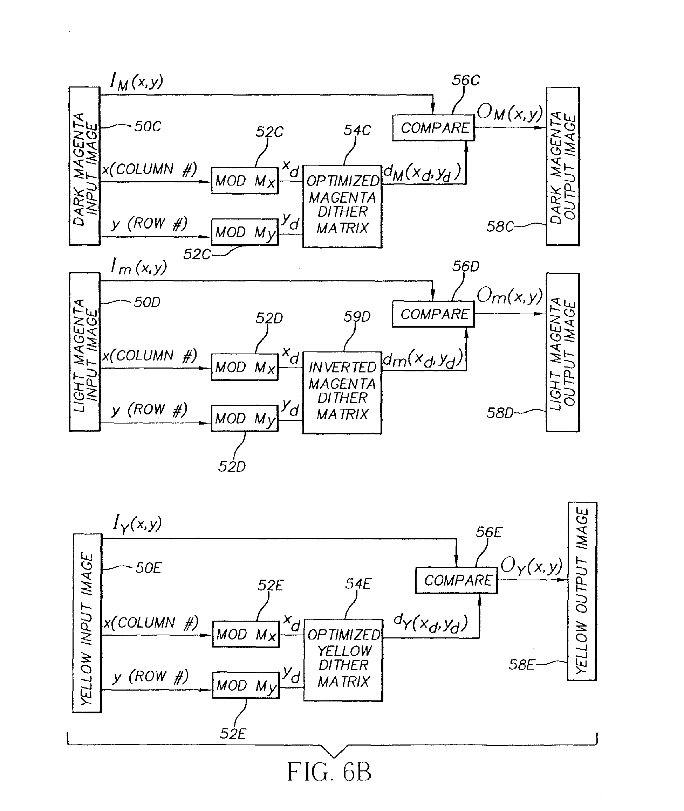

The present invention comprises a method for multitoning a digital image for printing on a device having at least one color channel that uses multiple colorants of similar color but different densities, so as to minimize the visibility of halftone patterns generated using a set of dither matrices. Such methods are respectively shown in FIG. 6, FIG. 7, and FIG. 8.

FIG. 6 shows an implementation using a set of comparators 56A-56 in which a multi-channel input color image has a dark cyan input image 50A, a light cyan input image 50B, a dark magenta input image 50C, a light magenta input image 50D, and a yellow input image 50E. The input images for each color channel are processed using a conventional dither halftoning method to form corresponding output images 58A, 58B, 58C, 58D and 58E. Modulo operators 52A, 52B, 52C, 52D and 52E are used to determine the dither matrix column and row addresses x_{d} and y_{d}, respectively for an input pixel having image column and row addresses x and y, respectively. The dither matrix column and row addresses are used to address dither matrices 54A, 59B, 54C, 59D and 54E for the dark cyan, light cyan, dark magenta, light magenta and yellow color channels, respectively, to determine addressed dither values d_{C}(x_{d},y_{d}), d_{c}(x_{d},y_{d}), d_{M}(x_{d},y_{d}), dₘ(x_{d},y_{d}). and d_{Y}(x_{d},y_{d}).

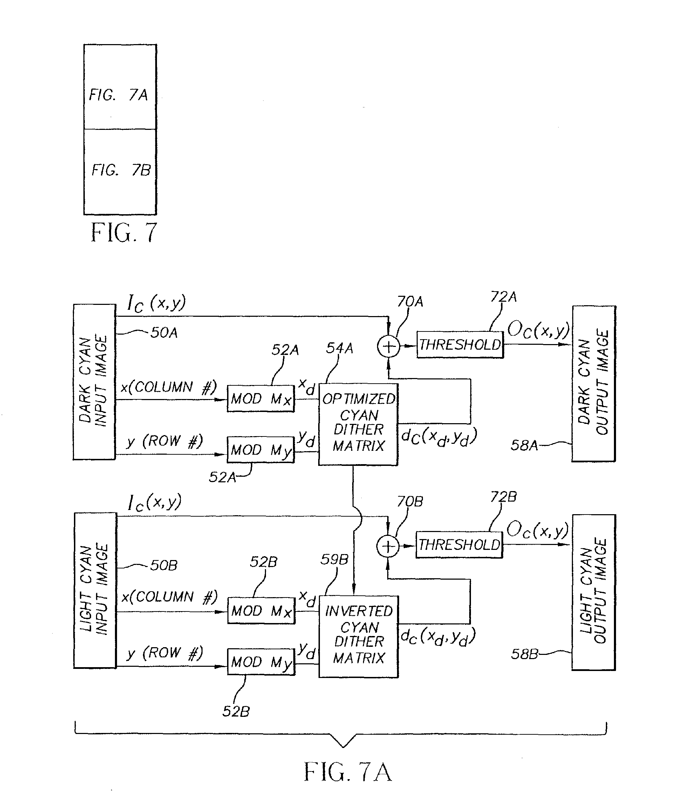

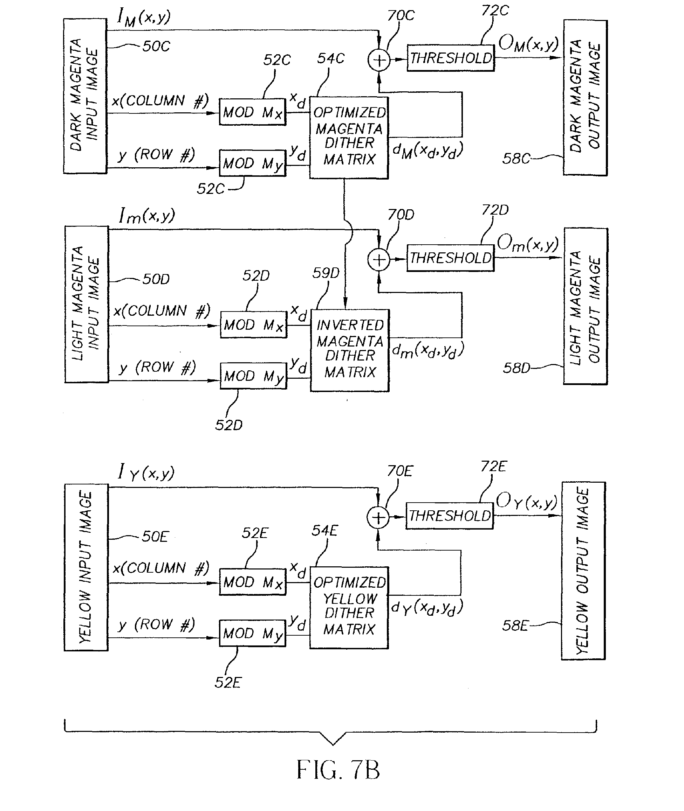

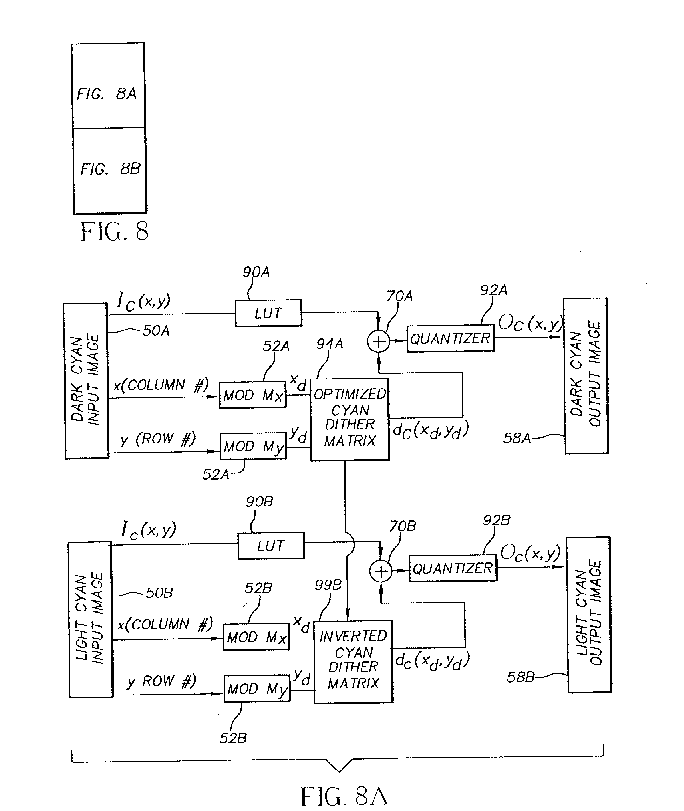

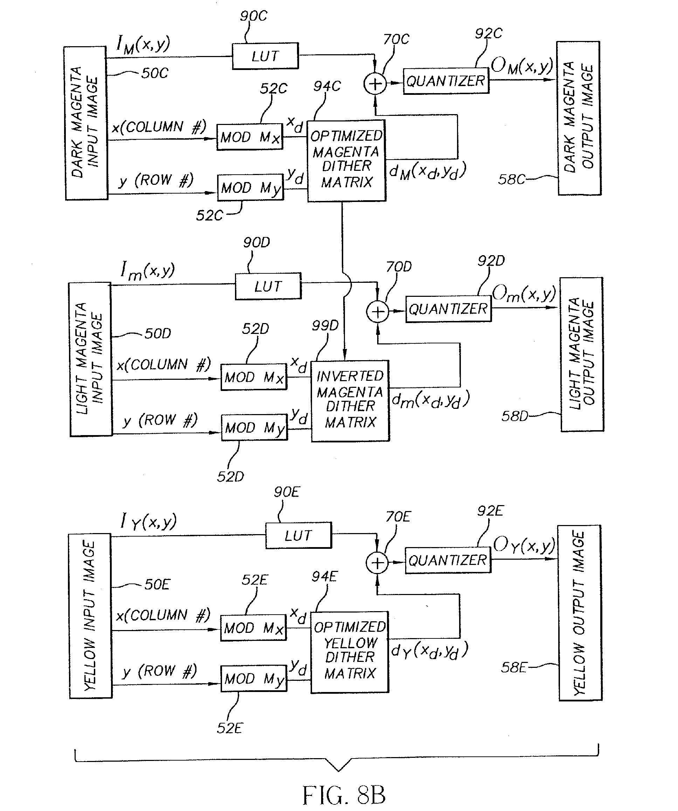

FIG. 7 shows an implementation using a set of adders 70A-70E and threshold operators 72A-E. FIG. 8 shows an implementation in a multilevel system using a set of quantizers 92A-E. The dither halftoning method of FIG. 8 is very similar to that shown in FIG. 7 except that the threshold operators 72A-E have been replaced by quantizers 92A-E, the dither matrices 54A, 54C and 54E have been replaced by multi-toning dither matrices 94A, 94C and 94E, and the inverted dither matrices 59B and 59D have been replaced by inverted multi-toning dither matrices 99B and 99D. The quantizers map modified input values within specified quantization intervals to corresponding output values.

These methods provide for optimal image quality in printers using two similar colorants, but do not contain sufficient flexibility to provide for optimal image quality in printers having three or more similar colorants. The term "similar colorants" refers to colorants having substantially the same color but different densities. The present invention provides for optimal image quality in a printer using any number of similar colorants. Assuming in the following example, that the printing device uses three black colorants with light, medium, and dark optical density, but it should be noted that this technique can easily be generalized to other types of imaging systems having multiple similar colorants as well, including printers that use multiple densities of cyan, magenta, or yellow ink.

An input digital image has an x,y array of input pixels for each color channel, where each input pixel is represented by a digital code value, typically in the range 0-4095. The input digital image may contain any number of color channels, and typically 1, 3, or 4 channel images corresponding to grayscale, red-green-blue (RGB), or cyan-magenta-yellow-black (CMYK) colors respectively are encountered. A printing device may have a corresponding set of colorants that are used to reproduce the image, or it may have a different set of colorants, in which case a conversion process is required to accurately reproduce the image. In describing a preferred embodiment of the present invention, consider a printer with three black colorants is used to reproduce an input digital image having a single grayscale color channel. The three black colorants have different optical densities referred to as K1 (light density), K2 (medium density), and K3 (dark density). It will be obvious to one skilled in the art that the invention is not limited to this scenario, and may be applied to any single color channel of a multichannel input digital image, or may be applied to a printer that uses colorants other than black, or more than three black colorants.

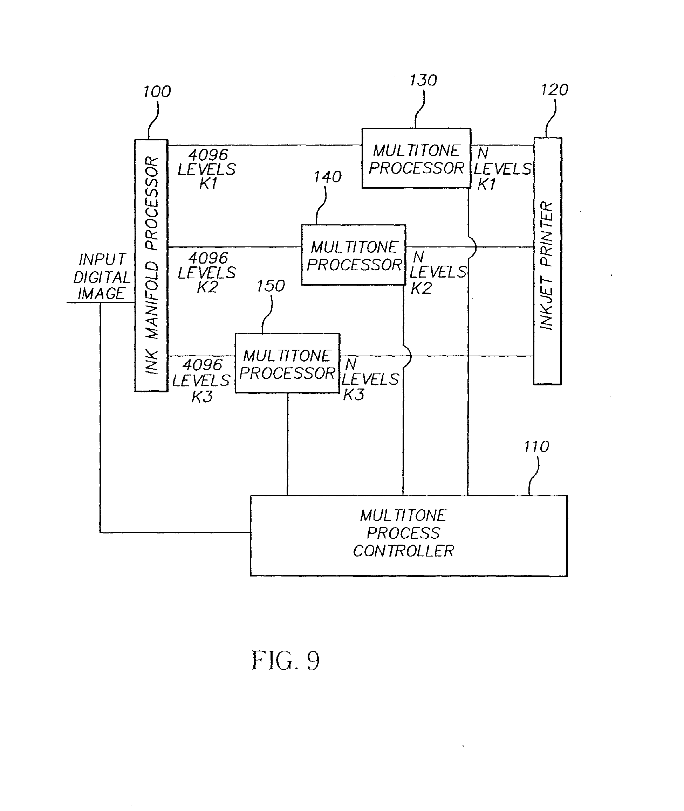

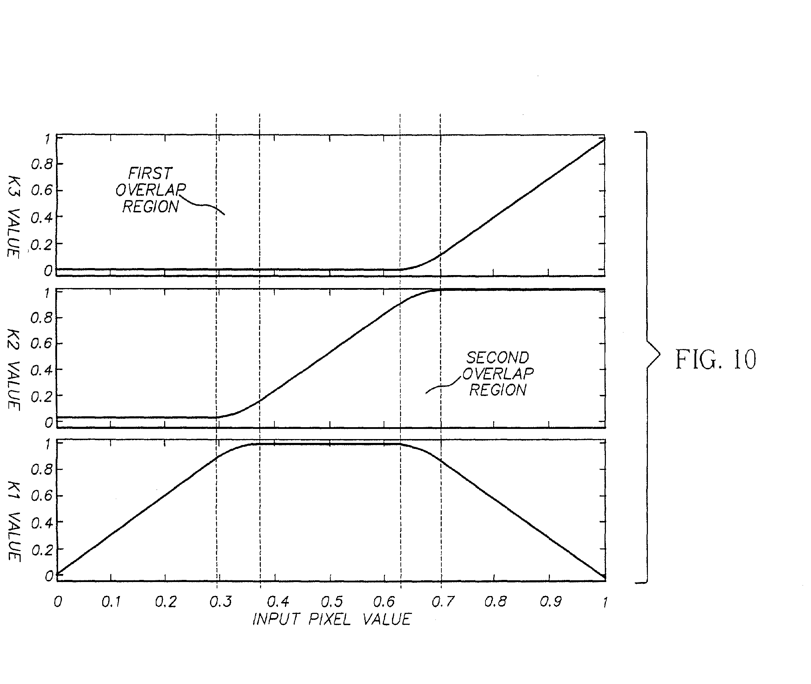

With reference to FIG. 9, one embodiment of the present invention is shown. In this embodiment, an ink manifold processor 100 is used to split a single channel grayscale input digital image into three separate colorant channels corresponding to the K1, K2, and K3 inks. The details of the ink manifold processor 100 are not fundamental to the invention, and a method for performing the splitting performed by the ink manifold processor is specified in US-A-6,312,101 to Couwenhoven and others. According to this method, a look-up table for each colorant channel is indexed by the input digital code value to produce a continuous-tone pixel value for each colorant that corresponds to the amount of colorant that gets printed at the pixel location on the page. The set of look-up tables for the colorant channels that specifies the splitting process is called the manifold LUT, an example of which is shown in FIG. 10, and will be discussed in more detail shortly.

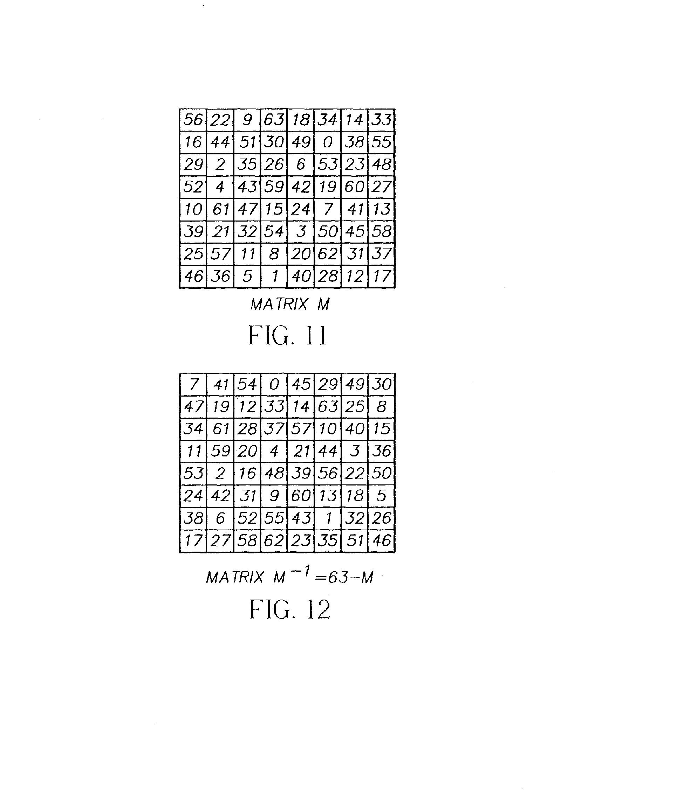

Still referring to FIG. 9, after the ink manifold processor 100 performs the splitting of the input digital code value into continuous-tone pixel values for each colorant channel, the continuous-tone pixel values are subsequently multitoned using multitone processors 130, 140, 150. The multitone processors 130, 140, 150 operate on the K1, K2, and K3 colorant channels respectively, and perform the function of reducing the number of gray levels in the continuous-tone pixel values to produce a multichannel multitoned output image having multitoned output pixel values which have fewer gray levels. The number of gray levels in the multitoned output pixel values matches the number of gray levels available in an inkjet printer 120. The multitoning process is required because the inkjet printer 120 can typically print many fewer density levels than are specified by the continuous-tone pixel values. As described above, there are many different implementations of the multitone processors 130, 140, 150 that may be applied to the present invention, and the particular implementation is not fundamental to the invention. In this example, the multitone processors 130, 140, 150 implement a blue noise dither process using a matrix of threshold values designed to minimize a visual cost function as set forth in US-A-5,822,451 to Spaulding and others, and according to the implementation described by FIG. 1, although any of the dither implementations could be equally used. One such matrix of dither values is shown in FIG. 11. This matrix is an 8x8 array of threshold values on the range (1, 64). As understood by one skilled in the art, the thresholds in the matrix should be scaled to match the range of the continuous-tone pixel values (which in case of the current example is (0,4095)) when used by the multitone processors 130, 140, 150. For clarity of explanation, the threshold values in the dither matrix are shown in the range (1, 64) so as to aid in understanding the order in which pixels in the 8x8 pattern will be turned on. As shown, the pixels in the pattern will be turned on in sequence starting at the location occupied by 1 and ending at the location occupied by 64.

Referring again to FIG. 9, the multitoned output pixel values are received by the inkjet printer 120, which places the desired amount of each of the K1, K2, and K3 inks on the page accordingly. A multitone process controller 110 is used to control the behavior of the multitone processors 130, 140, 150 responsive to the input pixel value. In a preferred embodiment, the multitone process controller 110 selects a multitone process to be used in each of the multitone processors 130,140,150. In the case of a matrix based dither process, the multitone process controller 110 would adaptively select the matrix of dither values that is used for each colorant channel as a function of the input pixel value. The functioning of the multitone process controller 110 is an important aspect of the invention, which is used advantageously to solve many of the aforementioned problems, and will be described in detail hereinbelow.

Consider, as shown in FIG. 10, that the manifold LUT specifies that the K1, K2, and K3 inks are used in the following way. Starting with white paper, as more density is required, the K1 ink is first added until nearly every pixel printed in a local region on the page contains a dot of K1 ink. Then, K2 ink is added to further increase the density until nearly every pixel contains an overlap of both K1 and K2 ink. Then, as we increase towards maximum density, the K3 ink is added as the K1 ink is removed. Thus, the maximum density is achieved when every pixel on the page contains an overlap of K2 and K3 ink. It is important to note that the form of the manifold LUT is not fundamental to the invention, and the invention may be applied to a system using any particular manifold LUT. To understand the motivation for the use of the multitone process controller 110 of FIG. 9, two tone levels in the tonescale of the printer of the current example will be examined. The first of these two tone levels roughly corresponds to the point in the tonescale at which the K1 ink is nearing full coverage and the K2 ink is just starting to be used. This is called the "first overlap region", which is shown in FIG. 10. The second of the two tone levels roughly corresponds to the point in the tonescale at which the K2 ink is nearing full coverage, the K3 ink is just starting to be used, and the K1 ink is at full coverage and just starting to be removed. This is called the "second overlap region", which is also shown in FIG. 10.

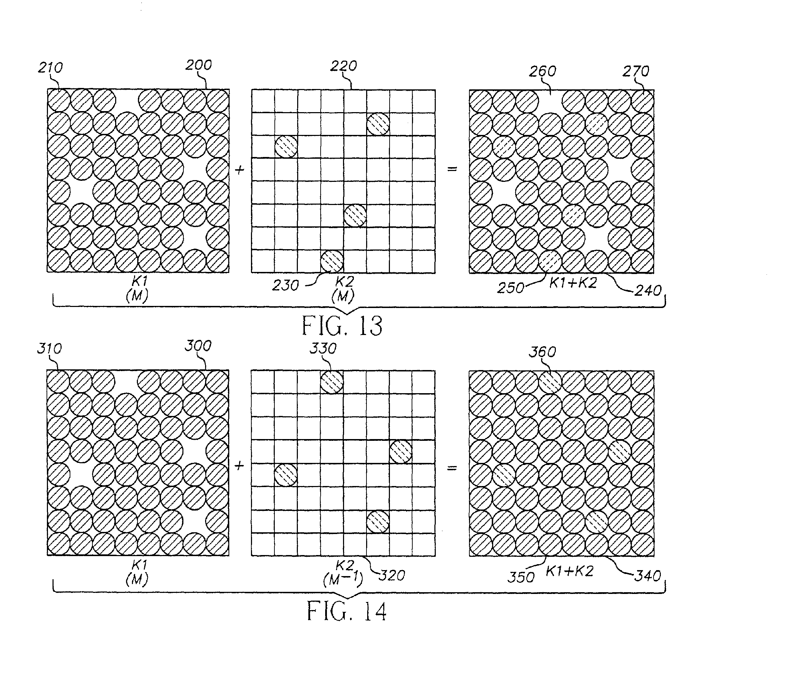

In the first overlap region, the K1 continuous-tone pixel value will be large, and the K2 continuous-tone pixel value will be small. After the multitoning step, this means that most of the pixels will contain a K1 dot, and a few of them will contain K2 dots. Referring to FIG. 13, a small (8x8 pixel) region of a printed image is shown which represents a typical halftone pattern that might be produced in the current example for tone levels near the first overlap region. In FIG. 13, an 8x8 region 200 of K1 dots 210 results from multitoning the K1 colorant channel using the matrix of dither values M shown in FIG. 11. The corresponding 8x8 region 220 of K2 dots 230 results from multitoning the K2 colorant channel using the dither matrix M. The superposition of these two bitmaps on the printed page produces an 8x8 pattern 240, in which some pixels have no dots 260, some pixels have only K1 dots 270, and some pixels have both K1 and K2 dots 250. This pattern is undesirable because it produces a "grainy" appearance when viewed by the human eye due to the fact that some pixels are white and some are very dark. The ideal pattern would appear smooth and continuous to the human observer, and would be optimally achieved if each pixel in the pattern was the same density.

An inverted dither matrix is simply computed by subtracting a dither matrix from a predetermined maximum value, which is typically the value of the largest threshold in the matrix. The inverted dither matrix, M⁻¹, of the dither matrix M is shown in FIG. 12. Simply stated, the first pixels to turn "on" in an inverted dither matrix will be at the same locations as the last pixels that remain "off'' in the non-inverted dither matrix. This is demonstrated by turning to FIG. 14, in which the inverted dither matrix M⁻¹ is now used to multitone the K2 channel, and the (non-inverted) dither matrix M is still used to multitone the K1 channel. Using this arrangement, the 8x8 pixel region 320 now contains K2 dots 330 that overlap the white spaces in the K1 bitmap 300 where no K1 dots 310 are printed. Thus, the superposition of the K1 and K2 bitmaps on the page results in an 8x8 pixel region 340 in which only K1 dots 350 or K2 dots 360 are printed. There are no pixels that contain overprints of K1 and K2, and none are left white. This pattern will be much more pleasing to the human eye, as it will appear more smooth and continuous. The multitone process controller 110 of FIG. 9 is used to specify that dither matrix M⁻¹ is used for channel K2, and dither matrix M is used for K1, thereby producing the optimal pattern shown in FIG. 14 for tone levels near the first overlap region. However, the benefits of the multitone process controller 110 become even greater upon examining the behavior near the second overlap region, as will be discussed next.

For tone levels near the second overlap region, the K2 ink is at nearly full coverage, the K3 ink is just starting to be used, and the K1 ink is at nearly full coverage and just starting to be removed (refer to the ink manifold curves shown in FIG. 10). For the same reasons stated above, it would be desirable to have the dither matrices used for the K2 and K3 channels be inverses of each other, so as to prevent the grainy appearance that can arise from having the K2 and K3 dots overlap. Since the dither matrix M⁻¹ is used for the K2 channel, then the dither matrix M must be used for the K3 channel. However, this can also lead to undesirable grainy patterns because the K1 and K3 channels are being multitoned with the same matrix, as will now be shown.

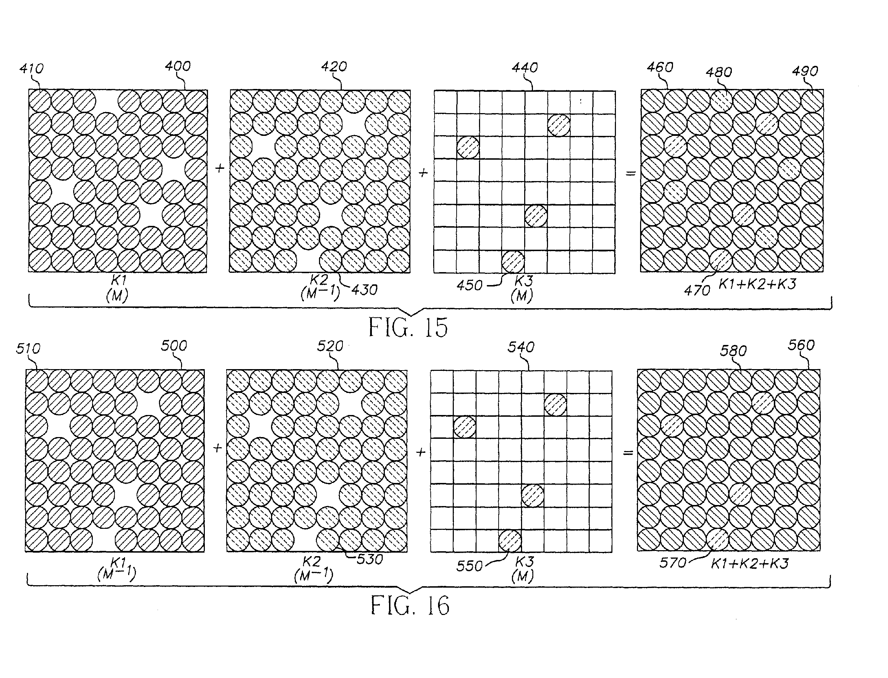

Turning to FIG. 15, the 8x8 pixel regions corresponding to the K1, K2, and K3 channels for a tone level near the second overlap region are shown as patterns 400, 420, and 440 respectively. The K1 pattern 400 contains K1 dots 410 and white holes where no K1 dot is placed, the K2 pattern 420 contains K2 dots 430 and white holes where no K2 dot is placed, and the K3 pattern 440 contains K3 dots 450 and white holes where no K3 dot is placed. Note that the K3 dots 450 overlap the white holes in the K2 pattern 420 as desired, but they do not overlap the white holes in the K1 pattern 400. Thus, the superposition of the three patterns 460 is shown in which some pixels 480 have K2 dots only, some pixels 470 have K1 and K3 dots, and other pixels 490 have K1 and K2 dots. The K2 dots 480 will be significantly lighter that the rest of the pixels, and the K1+K3 dots 470 will be significantly darker, resulting again in a grainy appearance to the region. Thus, a dilemma results in which three conflicting conditions need to be simultaneously satisfied: (a) the K1 and K2 dither matrices must be inverses; (b) the K2 and K3 dither matrices must be inverses; and (c) the K1 and K3 dither matrices must be inverses.

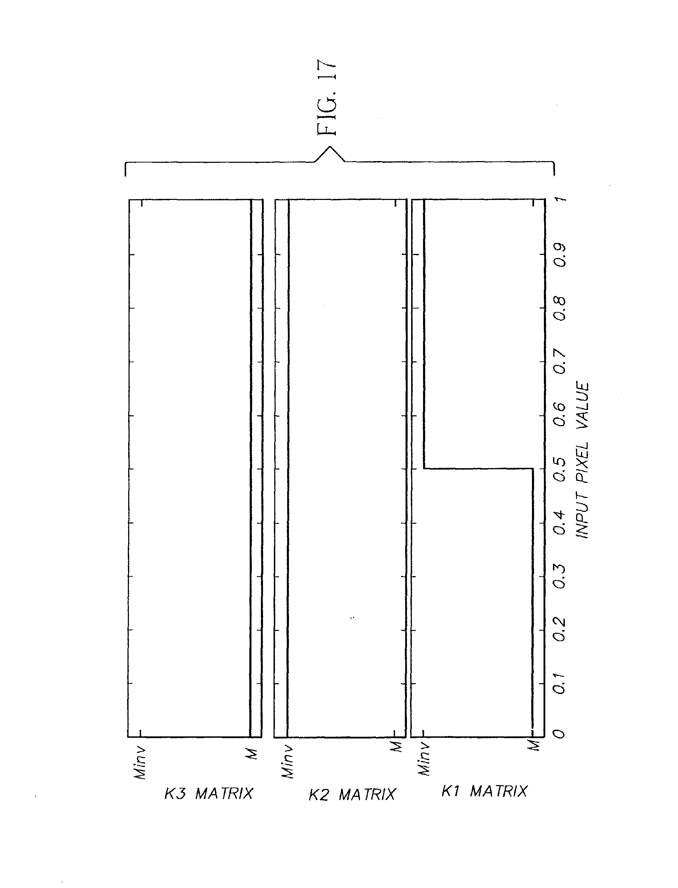

This set of conflicting constraints is solved using the multitone process controller 110 to modify the multitone processors 130, 140, 150 as a function of the input pixel value. This represents a significant departure from the prior art, and solves the conflicting set of conditions stated above by recognizing that these conditions do not simultaneously exist over the entire range of input pixel values. This will now be described in detail. Turning to FIG. 16, it can be seen that for tone levels near the second overlap region, if the dither matrix that is used for the K1 channel is switched to be M⁻¹, then the desired behavior is achieved. The 8x8 pixel region 500 of K1 dots 510 now has white holes that correspond with the 8x8 pixel region 520 of K2 dots 530. Furthermore, the occupied pixels of the 8x8 pixel region 540 of K3 dots 550 will fill in the white holes in the K1 and K2 bitmaps. Thus, the superposition of the K1, K2, and K3 bitmaps results in a pattern 560 which contains pixels 580 that have K1 and K2 dots, or pixels 570 that have only K3 dots. These pixels will be relatively close in density, resulting in a smoother, more uniform pattern. The key to achieving these optimal patterns is the ability of the multitone process controller 110 to change the dither matrix that is used for any channel as a function of the input pixel value. Also, a key realization is that once the continuous-tone pixel value for a channel reaches the maximum value, then all dither matrices will produce the same pattern, namely, every pixel will contain a dot. Thus, once the manifold LUT of FIG. 10 drives the continuous-tone pixel value for K1 to its maximum value (in between the first and second overlap regions), the multitone process controller 110 switches the dither matrix that is used for the K1 channel from M to M⁻¹. In a preferred embodiment, a threshold input pixel value is chosen which corresponds roughly to the center of the region where the K1 ink is at its maximum value. If the input pixel value is above this threshold, then the dither matrix used to process the K1 channel is switched to be M⁻¹, otherwise dither matrix M is used. This is graphically shown in FIG. 17, which shows the dither matrix that the multitone process controller 110 selects for each colorant channel as a function of the input pixel value. This arrangement provides for optimal image quality in both the first and second overlap regions by providing for patterns that have minimized graininess.

Switching between a set of dither matrices is just one way that the multitone process controller 110 can modify the multitone processors 130, 140, 150. As mentioned above, the multitone process controller 110 can also modify a set of dither bitmaps, dither LUTs or error diffusion parameters based on the input pixel value as needed to achieve optimal image quality. Also, the example presented above was described with respect to a particular manifold LUT, but those skilled in the art will recognize that other manifold LUTs exists, and the invention will apply to those equally well. The invention can also be applied to a color printer in which one or more of the color channels uses multiple similar colorants. For example, a printer having three cyan colorants, three magenta colorants, a yellow, and a black colorant may use the present invention advantageously to control the processing of the cyan and magenta channels.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for controlling one or more computers to practice the method according to the present invention.

Other features of the invention are included below.

The method wherein the selected multitone dither process includes the steps of:
a) modularly addressing the associated matrix of dither values using the x,y location of the input pixel in the input digital image to obtain an addressed dither value; and
b) using the addressed dither value, together with the continuous-tone pixel value for the corresponding colorant channel, to produce the multitoned output pixel value.

The method includes the step of comparing the addressed dither value with the continuous-tone pixel value for the corresponding colorant channel to produce the multitoned output pixel value.

The method includes the step of adding the addressed dither value to the continuous-tone pixel value for the corresponding colorant channel and comparing the sum to a threshold value to produce the multitoned output pixel value.

The method includes the step of adding the addressed dither value to the continuous-tone pixel value for the corresponding colorant channel and quantizing the sum to produce the multitoned output pixel value.

The method includes the step of using the addressed dither value to select a dither look-up table from a set of dither look-up tables, and using the continuous-tone pixel value to address the selected dither look-up table to produce the multitoned output pixel value.

The method wherein the multitone process controller selects from a plurality of multitone dither processes having associated sets of dither bitmaps.

The method wherein the plurality of sets of dither bitmaps contains at least a first set of dither bitmaps, and a second set of dither bitmaps formed by subtracting the value of each element of the first set of dither bitmaps from a predetermined maximum value.

The method wherein the ink manifold processor produces the continuous-tone pixel values by applying a one-dimensional manifold function for each colorant channel to the input pixel value.

The method wherein the manifold function for at least one of the colorant channels is a continuous function and includes a increasing segment, followed by a substantially constant segment, and further followed by a decreasing segment.

The method wherein the multitone process controller selects from a plurality of multitone dither processes having associated matrices of dither value, and wherein the plurality of dither matrices contains at least a first matrix of dither values, and a second matrix of dither values formed by subtracting the value of each element of the first matrix of dither values from a predetermined maximum value.

The method wherein the multitone process controller selects the first matrix of dither values for input pixel values below a threshold input pixel value and the second matrix of dither values for input pixel values above the threshold input pixel value.

The method wherein the one-dimensional manifold function is a one-dimensional look-up table addressed by the input pixel value.

The method wherein the multitoned output pixel values have at least two levels.

The method including using multitone dither processes having matrices of dither values for at least two color channels of the color input digital image and wherein two or more of the matrices of dither values are designed jointly to minimize a visual cost function.

## Claims

1. A method for processing an input digital image having an x,y array of input pixels having associated input pixel values, to produce a multichannel multitoned output image having two or more colorant channels, wherein at least two of the colorant channels are similar, having substantially the same color but different densities, comprising the steps of:
a) determining continuous-tone pixel values for each colorant channel of the input digital image in response to the input pixel values using an ink manifold processor;
b) for each colorant channel, selecting a multitone process from a plurality of multitone processes in response to an input pixel value using a multitone process controller;
c) for each colorant channel, applying the selected multitone process to the continuous-tone pixel value to produce a multitoned output pixel value; and
d) repeating steps a)-c) for each input pixel in the input digital image to produce the multichannel multitoned output image.

2. The method of claim 1 wherein the color of the colorant channels is substantially black.

3. The method of claim 1 wherein the color of the colorant channels is substantially cyan.

4. The method of claim 1 wherein the color of the colorant channels is substantially magenta.

5. The method of claim 1 wherein the color of the colorant channels is substantially yellow.

6. The method of claim 1 wherein the multitone process controller selects from the plurality of multitone dither processes each having associated matrices of dither values.

7. The method of claim 6 wherein at least one matrix of dither values is designed to minimize a visual cost function.

8. The method of claim 6 wherein the multitone process controller selects a matrix of dither values to be used for each colorant channel responsive to the input pixel value.

9. The method of claim 6 wherein the plurality of dither matrices contains at least a first matrix of dither values, and a second matrix of dither values formed by subtracting the value of each element of the first matrix of dither values from a predetermined maximum value.

10. The method of claim 9 wherein for some range of input pixel values the multitone process controller selects the first matrix of dither values for a first colorant channel, and the second matrix of dither values for a second colorant channel.
